# EUROPEAN PATENT SPECIFICATION

(11) **EP 3 770 437 B1**
(45) Date of publication and mention of the grant of the patent: **12.04.2023**
(21) Application number: 20184132.7
(22) Date of filing: 06.07.2020
(51) Int. Cl.: F04D 13/06, F04D 13/08, F04D 15/02, F04D 29/42, F04D 29/62

(54) **ELECTRIC PUMP WITH CUSTOMIZABLE ACCESSORIES**
ELEKTRISCHE PUMPE MIT ANPASSBAREN ZUBEHÖRTEILEN
POMPE ÉLECTRIQUE COMPORTANT DES ACCESSOIRES PERSONNALISABLES

(30) Priority: 25.07.2019 IT 201900012849
(43) Date of publication of application: 27.01.2021
(73) Proprietor: Dab Pumps S.p.A., 35035 Mestrino (Padova) (IT)
(72) Inventor: SINICO, Francesco, 36075 MONTECCHIO MAGGIORE VI (IT); CIUCHI, Francesco, 56025 PONTEDERA PI (IT); FULCERI, Yuri, 57023 CECINA LI (IT)
(74) Representative: Tiburzi, Andrea

(56) References cited:
- EP-A1- 1 452 739
- EP-A1- 3 404 267
- EP-A1- 3 477 114
- EP-B1- 1 452 739
- WO-A1-2016/173660
- WO-A1-2017/021222
- JP-A- 2017 198 162
- KR-A- 20170 082 297

## Description

The present invention relates to an electric pump with customizable accessories.

Electric pumps of the submersed and surface type are currently known, see e.g. EP 3404267 A1 and WO 2016/173660 A1, which can have a plurality of accessories, such as for example a level sensor, a local user interface, a float for activation of non-continuous operation.

Usually these accessories are connected to the actuation and control assembly of the pump, which manages their operation, by means of a physical electrical connection.

These known methods have some drawbacks.

These electric pumps of the known type comprise an assembly for the actuation and control of the pump, which contains the electronic components that are useful for the operation of the pump and is contained in a compartment that has at least two through openings and/or holes adapted for communication with the outside of the actuation and control assembly:
- a first opening and/or hole for the passage of the electric power supply cable;
- a second opening and/or hole for the passage of the electrical cable for connection to one or more accessories.

This causes the need to make provisions, during designing step, for these two openings/holes by arranging them appropriately and then providing them during production, causing manufacturing difficulties.

Furthermore, this causes the need to use multiple solutions to insulate/seal the compartment that contains the actuation and control assembly and ensure its tightness.

In the case of a submersed electric pump, for example, infiltrations of water both from the opening/hole for the power supply cable and from the opening/hole for the cable for connection to an accessory may occur.

Finally, another drawback is constituted by the fact that the user must predict, before purchase, which accessories he will need and cannot customize the accessories at a later time, since they are assembled during production and cannot be removed/modified at a later stage.

The aim of the present invention is to provide an electric pump that is capable of improving the background art in one or more of the aspects indicated above.

Within this aim, an object of the invention is to provide an electric pump with accessories that can be customized by the user after purchase and can be easily installed by the latter.

Another object of the invention is to provide an electric pump that has an actuation and control assembly with a lower risk of infiltrations from the outside and which therefore requires a smaller number of solutions in order to ensure its tightness.

A further object of the invention is to provide an electric pump that allows the user to customize his accessories and is easier and simpler to provide with respect to similar pumps of the known type.

Another object of the invention is to provide an electric pump with accessories that can be customized by the user which comprises a compartment for the containment of the actuation and control assembly that has a single through opening that communicates with the outside.

A further object of the present invention is to overcome the drawbacks of the background art in a manner that is alternative to any existing solutions.

Another object of the invention is to provide an electric pump with customizable accessories that is highly reliable, relatively easy to provide and at competitive costs.

This aim, as well as these and other objects which will become better apparent hereinafter, are achieved by an electric pump of the submersed type according to claim 1.

Further characteristics and advantages of the invention will become better apparent from the description of a preferred but not exclusive embodiment of the electric pump according to the invention, illustrated by way of non-limiting example in the accompanying drawings, wherein:

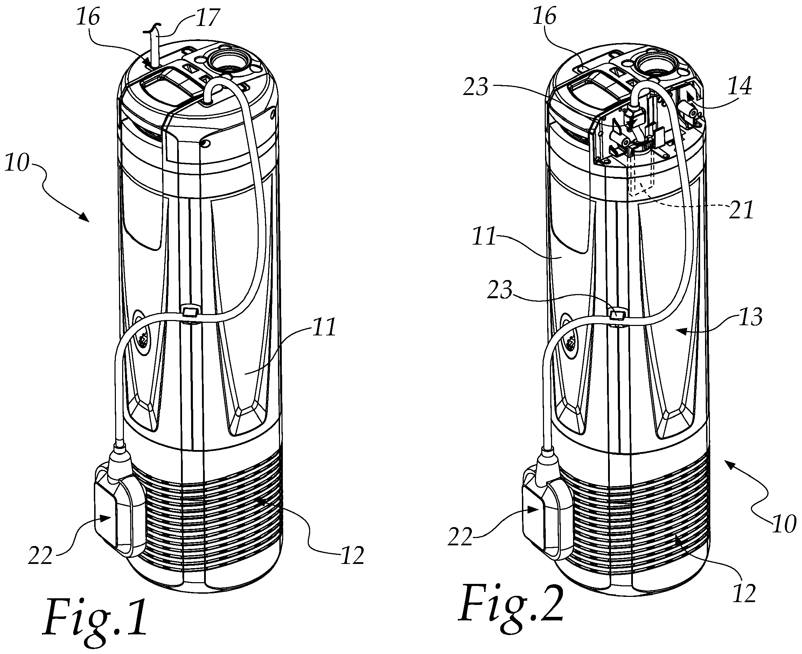

Figure 1 is a general view of an electric pump according to the invention;
Figure 2 is a partially disassembled view of the electric pump of Figure 1;

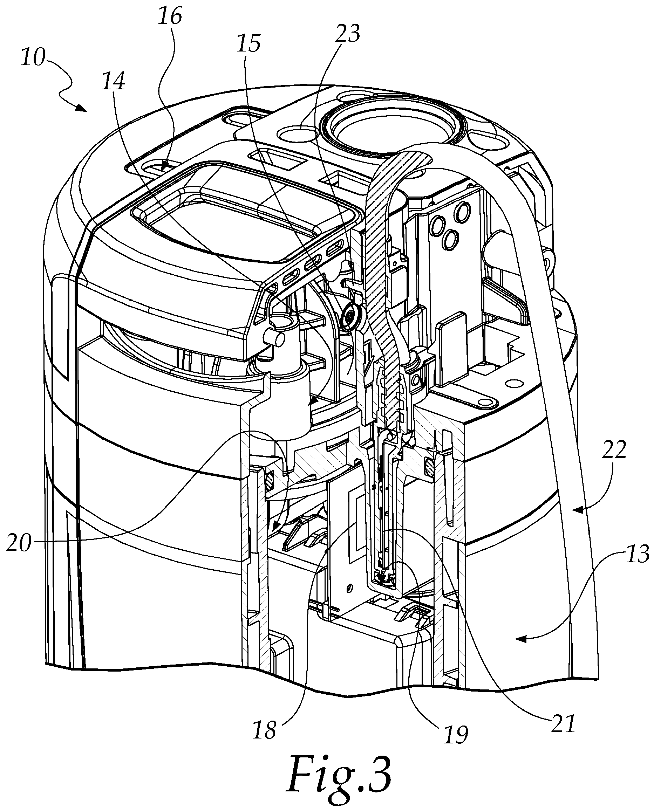

Figure 3 is a sectional view of a detail of the electric pump of Figure 1;

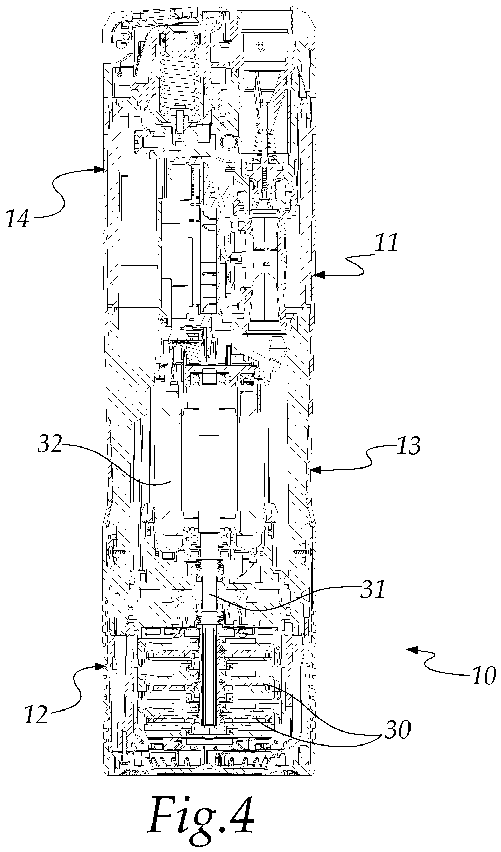

Figure 4 is a sectional view of the electric pump of Figure 1.

With reference to the figures, an electric pump according to the invention is designated generally by the reference numeral 10.

In the illustrated example, the electric pump 10 is of the submersed type; however, the invention is also applicable to surface electric pumps.

The electric pump 10 comprises a containment shell 11.

The electric pump 10 comprises:
- a wet section 12, comprising an intake portion and a delivery portion, both not shown in the figures, and one or more impellers 30 keyed on a shaft 31 and interposed between the intake portion and the delivery portion,
- an electromechanical section 13, which comprises motor means 32 adapted for the movement of the shaft 31,
- an electronic section 14, which comprises a compartment 20 inside which an assembly 15 for the actuation and control of the electric pump 10 is contained, said assembly having an electrical board.

The compartment 20 has a single opening/hole 16 for communication between the inside of the compartment 20 and the outside of the electric pump 10.

The opening/hole 16 is intended exclusively for the passage of a cable 17 for the electric power supply of the electric pump 10.

The electric power supply cable 17 is connected to the actuation and control assembly 15 of the electric pump 10.

The seal of the electronic section 14 is ensured, proximate to and/or at the opening/hole 16, by the presence of sealing elements, not shown in the figures, such as O-rings and/or gaskets.

One of the particularities of the invention resides in that the actuation and control assembly 15 comprises communication means of the NFC (Near-Field Communication) type.

In the illustrated example, said communication means of the NFC type is an antenna 18.

The electric pump 10 comprises mechanical means for the coupling of one or more accessories 22, which comprise corresponding complementary mechanical means.

In particular, the antenna 18 is arranged proximate to a receptacle 19 which is internal to the electronic region 14 and can be accessed from the outside of the shell 11 but is external to the compartment 20.

The receptacle 19 is adapted for the insertion of a corresponding device 21 of the NFC type.

The device 21 is arranged at a portion, for example one end, of an accessory 22.

In the example shown in the figures, the accessory 22 is a floating switch for the non-continuous operation of the electric pump.

Other possible accessories, not shown in the figures, are for example: level sensors, local user interface, sensors for estimating the quantity of water in a tank.

By virtue of the NFC communication between the antenna 18 of the actuation and control assembly 15 and the device 21 of the accessory 22, it is possible to install one or more accessories 22 on the electric pump 10 without the need to connect them physically/electrically to the electrical board of the actuation and control assembly 15 and therefore without the need for a further opening/hole in the compartment 20.

This allows at the same time to reduce the risk of infiltrations within the compartment 20 and therefore to use a smaller number of solutions to ensure its tightness with respect to similar electrical pumps of the known type.

Furthermore, the user can purchase the electric pump 10 and decide later whether to purchase and install accessories 22 and if so which ones.

By virtue of the NFC communication between the antenna 18 of the actuation and control assembly 15 and the device 21 of the accessory 22, the user can install autonomously and easily any accessory 22 on the electric pump 10.

In particular, the receptacle 19 has such a shape and dimensions as to be substantially shaped complementarily to the device 21, so as to ensure easy insertion and coupling of the device 21 inside it.

The accessory 22, after the engagement of the device 21 in the receptacle 19, is optionally anchored to the body of the electric pump 10 and/or to its shell 11 by virtue of fixing elements 23, of a per se known type, such as for example pins, screws, supports for interlocking in the shell 11.

The device 21 has a substantially quadrangular profile and is substantially flat.

In constructive variations not shown in the figures, the enclosure of the accessory 22 can coincide with the enclosure of the device 21.

The operation of the electric pump 10 according to the invention is as follows.

The user, after purchasing the electric pump 10, even years later, can purchase an accessory 22 thereof.

In order to install the accessory 22 on the electric pump 10 it is sufficient to insert the device 21 of the accessory 22 in the receptacle 19 of the electronic section 14 of the electric pump 10.

By virtue of the NFC connection between the antenna 18 of the actuation and control assembly 15 and the device 21 of the accessory 22, the accessory communicates with, and is managed by, the actuation and control assembly 15 without the need for a physical/electrical connection between the two, as instead occurs in similar electric pumps of the known type.

In practice it has been found that the invention achieves the intended aim and objects, providing an electric pump with accessories that can be customized by the user after purchase and can be easily installed by the latter.

The invention provides an electric pump that has a compartment for the containment of the actuation and control assembly with a smaller risk of infiltrations from the outside with respect to similar electric pumps of the known type and which therefore requires a smaller number of solutions to ensure its tightness.

The invention also provides an electric pump that allows the user to customize his accessories and is easier and simpler to provide with respect to similar pumps of the known type.

Finally, the invention provides an electric pump with accessories that can be customized by the user which comprises a compartment that contains the actuation and control assembly which has a single through opening which communicates with the outside.

The invention thus conceived is susceptible of numerous modifications and variations, all of which may be within the scope of the invention, which is defined by the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An electric pump (10) of the submersed type comprising:
- a containment shell (11),
- a wet section (12), comprising an intake portion, a delivery portion and one or more impellers (30) keyed on a shaft (31), said one or more impellers (30) being interposed between said intake portion and said delivery portion,
- an electromechanical section (13), comprising motor means (32) for the movement of said shaft (31),
- an electronic section (14), comprising a compartment (20) inside which an actuation and control assembly (15) is contained, said actuation and control assembly (15) having an electrical board,
said actuation and control assembly (15) comprising communication means (18) of the NFC type,
the electric pump (10) comprises further at least one accessory (22) which comprises a device (21) of the NFC type, and
said communication means (18) of the NFC type are arranged proximate to a receptacle (19) for said device (21), said receptacle (19) being internal to said electronic region (14) and accessible from the outside of said shell (11) but external to said compartment (20).

2. The electric pump (10) according to claim 1, **characterized in that** it comprises mechanical means for the coupling of said at least one accessory (22), said at least one accessory (22) comprising corresponding complementary mechanical means.

3. The electric pump (10) according to claim 1, **characterized in that** said compartment (20) has a single opening/hole (16) for communication between the inside of said compartment (20) and the outside of said electric pump (10), said opening/hole (16) being exclusively suitable for the passage of a cable (17) for the electric power supply of said electric pump (10).

4. The electric pump (10) according to one or more of the preceding claims, **characterized in that** said device (21) is arranged at an end portion of said at least one accessory (22).

5. The electric pump (10) according to one or more of the preceding claims, **characterized in that** said device (21) has a substantially quadrangular profile and is substantially flat.

6. The electric pump (10) according to one or more of the preceding claims, **characterized in that** said receptacle (19) has such a shape and dimensions as to be substantially shaped complementarily to said device (21).

7. The electric pump (10) according to one or more of the preceding claims, **characterized in that** said accessory (22) is anchored to a body of said electric pump (10) and/or to said shell (11) by virtue of fixing elements (23).

## Patentansprüche

1. Eine elektrische Pumpe (10) des Eintauchtyps, die Folgendes umfasst:
- einen Sicherheitsbehälter (11),
- einen Nassbereich (12), der einen Einlassbereich, einen Auslassbereich und ein oder mehrere Laufräder (30) umfasst, die auf einer Welle (31) verkeilt sind, wobei das eine oder die mehreren genannten Laufräder (30), zwischen dem genannten Einlassbereich und dem genannten Auslasserbereich eingefügt sind,
- einen elektromechanischen Teil (13), der eine Motoreinrichtung (32) umfasst, um die
genannte Welle (31) zu bewegen,
- einen elektronischen Teil (14), der ein Fach (20) im Inneren umfasst
die eine Betätigungs- und Steuereinheit (15) enthält, wobei die genannte Betätigungs-
und die genannte Steuereinheit (15) auf einer elektrischen Platine angeordnet sind,
die genannte Betätigungs- und Steuereinheit (15) beinhaltet die Kommunikation mittel (18) des Typs NFC, die elektrische Pumpe (10) umfasst ferner mindestens ein Zubehörteil (22), das aus einem Gerät (21) besteht, das den NFC-Typ beinhaltet, wobei die genannten Kommunikationsmittel (18) des NFC-Typs in der Nähe eines Aufnahmebehälters (19) für das Gerät (21) angeordnet sind, wobei der Aufnahmebehälter (19) innerhalb des elektronischen Bereichs (14) und außerhalb der Schale (11), aber außerhalb des Fachs (20) zugänglich ist.

2. Elektrische Pumpe (10) nach Anspruch 1, **dadurch gekennzeichnet, dass** sie mechanische Mittel zur Kopplung des mindestens einen Zubehörteils umfasst (22), wobei das mindestens eine Zubehörteil (22) entsprechende ergänzende mechanische Mittel umfasst.

3. Elektrische Pumpe (10) nach Anspruch 1, **dadurch gekennzeichnet, dass**
das Fach (20) eine einzelne Öffnung/Loch (16) für die Kommunikation zwischen der Innenseite des Fachs (20) und der Außenseite der elektrischen Pumpe (10) aufweist, wobei die Öffnung/Loch (16) ausschließlich für den Durchgang eines Kabels (17) für die Stromversorgung der genannten elektrischen Pumpe (10) geeignet ist.

4. Die elektrische Pumpe (10) nach einem oder mehreren der vorhergehenden Ansprüche, **dadurch gekennzeichnet, dass** das genannte Gerät (21) an einem Ende des mindestens einem genannten Zubehörteil (22) angeordnet ist.

5. Die elektrische Pumpe (10) nach einem oder mehreren der vorhergehenden Ansprüche, **dadurch gekennzeichnet, dass** das genannte Gerät (21) eine im Wesentlichen viereckige Form aufweist und im Wesentlichen flach ist.

6. Die elektrische Pumpe (10) nach einem oder mehreren der vorhergehenden Ansprüche, **dadurch gekennzeichnet, dass** der Aufnahmebehälter (19) eine solche Form hat und so dimensioniert ist, dass er im Wesentlichen komplementär zu dem genannten Geräte (21) geformt ist.

7. Die elektrische Pumpe (10) nach einem oder mehreren der vorhergehenden Ansprüche, **dadurch gekennzeichnet, dass** das genannte Zubehörteil (22) an einem Körper der genannten elektrischen Pumpe (10) und/oder an der Schale (11) mit Hilfe von Befestigungselementen (23) verankert ist.

## Revendications

1. Une pompe électrique (10) du type immergé comprend:
- une enveloppe de confinement (11),
- une section humide (12), comprenant une partie d'entrée, une partie de distribution et une ou plusieurs roues à ailettes (30) clavetées sur un arbre (31), lesdites roues à ailettes (30) étant interposées entre ladite partie d'entrée et ladite partie de distribution,
- une section électromécanique (13), comprenant des moyens moteurs (32) pour le mouvement dudit arbre (31),
- une section électrique (14), comprend un compartiment (20) à l'intérieur de laquelle un actionnement et un ensemble de commandes (15) est contenu, ledit actionnement et ensemble de commandes (15) possède un tableau électrique, ledit actionnement et ensemble de commandes (15) comprend des moyens de communication (18) de type NFC, la pompe électrique (10)
comprend également au moins un accessoire (22) qui comprend un dispositif (21) de type NFC, et
des moyens de communication (18) de type NFC sont disposés à proximité d'un réceptacle (19) pour ledit dispositif (21), ledit réceptacle (19) étant à l'intérieur de ladite région électronique (14) et accessible à partir de l'extérieur de ladite enveloppe de confinement (11), mais à l'extérieur dudit compartiment (20).

2. La pompe électrique (10) selon la revendication 1 est **caractérisée par le fait qu'**elle comprend des moyens mécaniques pour coupler au moins un accessoire (22), ledit accessoire (22) comprenant des moyens mécaniques correspondants.

3. La pompe électrique (10) selon la revendication 1 est **caractérisée par le fait que** ledit compartiment (20) possède une seule ouverture (16) pour communiquer entre l'intérieur dudit compartiment (20) et l'extérieur de ladite pompe électrique (10), ladite ouverture (16) étant exclusivement adaptée pour le passage d'un câble (17) pour l'alimentation électrique de ladite pompe électrique (10).

4. La pompe électrique (10) selon l'une quelconque des revendications précédentes est **caractérisée par le fait que** le dispositif (21) est disposé à une extrémité dudit accessoire (22).

5. La pompe électrique (10) selon l'une quelconque des revendications précédentes est **caractérisée par le fait que** le dispositif (21) possède un profil sensiblement quadrangulaire et est sensiblement plat.

6. La pompe électrique (10) selon l'une quelconque des revendications précédentes est **caractérisée par le fait que** ledit réceptacle (19) possède une forme et des dimensions de manière à avoir une forme sensiblement complémentaire à celle dudit dispositif (21).

7. La pompe électrique (10) selon l'une quelconque des revendications précédentes est **caractérisée par le fait que** ledit accessoire (22) est ancré dans le corps de ladite pompe électrique (10) et pour ladite enveloppe (11) en raison de la fixation des éléments (23).
